# EUROPEAN PATENT APPLICATION

(11) **EP 4 741 781 A1**
(43) Date of publication of application: **13.05.2026**
(21) Application number: 24835914.3
(22) Date of filing: 20.06.2024
(51) Int. Cl.: G01J 3/02, A61B 10/00, G01J 3/36, G01J 3/44, G01N 21/65

(54) **SPECTROMETRY DEVICE AND SPECTROMETRY METHOD**

(30) Priority: 06.07.2023 JP 2023111741
(71) Applicant: The University of Osaka, Osaka 565-0871 (JP)
(72) Inventor: KUMAMOTO Yasuaki, Suita-shi, Osaka 565-0871 (JP)
(74) Representative: Potter Clarkson
(86) International application number: PCT/JP2024/022337
(87) International publication number: WO 2025/009401

(57) **Abstract**

A spectrometry apparatus (1) according to the present embodiment includes a first fiber unit (70) that irradiation light enters, a portable unit (80) to which the first fiber unit is connected, a spectrophotometer (50) that disperses signal light rays, a second fiber unit (40) connected to the portable unit (80), a plurality of fibers being adjacently arranged at an entrance end surface and the plurality of fibers being arranged in a multi-line shape at intervals at an exit end surface, and a processing unit that, by referring to a layout relationship among the plurality of fibers at the entrance end surface and the exit end surface of the second fiber unit (40), generates a spectroscopic image of the sample from a result of detection by a two-dimensional array photodetector.

## Description

### Technical Field

The present invention relates to a spectrometry apparatus and a spectrometry method, and more particularly relates to a spectrometry apparatus for subjecting signal light rays such as Raman scattered light produced from a sample to spectrometry to generate a spectroscopic image, and a spectrometry method.

### Background Art

Patent Literature 1 and Non Patent Literature 1 to Non Patent Literature 4 disclose methods for measuring Raman spectra. Patent Literature 1 discloses a multifocal confocal Raman microscope through use of a fiber bundle. Light rays from a pinhole array respectively enter an entrance end of the fiber bundle. In Non Patent Literature 1, a fiber bundle is laid out in front of a spectrophotometer. In addition, in Non Patent Literature 1, fibers are aligned at an exit end.

In Non Patent Literature 2, illumination light is modulated by a liquid-crystal spatial light modulator to generate multiple foci. Non Patent Literature 3 discloses a multifocal confocal Raman spectroscopic microscope. In Non Patent Literature 3, multiple foci are generated using a microlens array. Moreover, in Non Patent Literature 3, multiple fibers are used. In Non Patent Literature 4, 21 × 21 = 441 multiple points are simultaneously illuminated. Raman scattered light from the multiple foci are guided to a spectrophotometer through a bundle fiber.

### Citation List

### Patent Literature

Patent Literature 1: Japanese Unexamined Patent Application Publication No. 2012-237647

### Non Patent Literature

Non Patent Literature 1: "High-resolution confocal Raman microscopy using pixel reassignment" Roider, et al., Optics Letters Vol. 41, Issue 16, pp. 3825-3828 (2016)
Non Patent Literature 2: "Tissue diagnosis using power-sharing multifocal Raman micro-spectroscopy and auto-fluorescence imaging" Sinjab, et al., Biomed. Opt. Express 7, 2993 (2016).
Non Patent Literature 3: "Rapid and accurate peripheral nerve imaging by multipoint Raman spectroscopy" Kumamoto, et al., Sci. Rep. 7, 845 (2017).
Non Patent Literature 4: Internet search: https://www.tokyoinst.co.jp/products/detail/raman_microscopy/TI02/index.html [searched on June 16, 2023]
Non Patent Literature 5: Internet search: https://www.teminc.co.jp/products/detail-29.php [searched on December 8, 2021]

### Summary of Invention

For various samples, it is desired to subject Raman scattered light to spectrometry to generate a spectroscopic image. In Raman spectroscopic imaging in Non Patent Literature 1 to Non Patent Literature 4, however, the use of an optical microscope enclosure limits samples to sizes that are placeable on an optical microscope stage. This raises a problem in that a large stage or the like is required in order to subject large samples to spectrometry.

The present disclosure has been made in view of the above points and has an object to provide a spectrometry apparatus which is compact and can subject various samples to spectrometry, and a spectrometry method.

A spectrometry apparatus according to the present embodiment includes a light source that produces irradiation light, a spatial light modulator that spatially modulates the irradiation light from the light source, a first fiber unit that the irradiation light enters, a portable unit to which the first fiber unit is connected, an irradiation optical system that is housed in the portable unit and guides the irradiation light emitted from the first fiber unit to a sample, a detection optical system that is housed in the portable unit and guides signal light rays from the sample irradiated with the irradiation light, a spectrophotometer that disperses the signal light rays and detects the signal light rays by a two-dimensional array photodetector, a second fiber unit connected to the portable unit and having a plurality of fibers that guide the signal light rays from the detection optical system to the spectrophotometer, the plurality of fibers being adjacently arranged at an entrance end surface of the second fiber unit, and the plurality of fibers being arranged in a multi-line shape at intervals at an exit end surface of the second fiber unit, the exit end surface being located toward the spectrophotometer, and a processing unit that, by referring to a layout relationship among the plurality of fibers at the entrance end surface and the exit end surface of the second fiber unit, generates a spectroscopic image of the sample from a result of detection by the two-dimensional array photodetector.

The above-described spectrometry apparatus may further include a spatial light modulator that spatially modulates the irradiation light from the light source, in which the irradiation light modulated by the spatial light modulator may enter the first fiber unit.

The above-described spectrometry apparatus may include a camera that captures an optical image of the sample, in which a plurality of spots on the sample extracted based on the optical image may be selectively illuminated.

The above-described spectrometry apparatus may further include an observation illumination light source that produces observation illumination light, in which observation light from the sample illuminated with the observation illumination light may propagate through the irradiation optical system and enter the first fiber unit, and the camera may detect the observation light emitted from the first fiber unit.

In the above-described spectrometry apparatus, the observation illumination light source may be a ring lighting provided at a leading end of the portable unit, the leading end being located toward the sample.

In the above-described spectrometry apparatus, a plurality of spots on the sample extracted based on the optical image may be selectively illuminated.

In the above-described spectrometry apparatus, the entrance end surface of the second fiber unit may be laid out at a position conjugate to the sample.

In the above-described spectrometry apparatus, a window that transmits the irradiation light and the signal light rays may be provided at a leading end of the portable unit.

In the above-described spectrometry apparatus, the number of fibers included in a line may decrease toward both ends in a direction corresponding to a dispersion direction of the spectrophotometer at the exit end surface of the second fiber unit.

A spectrometry apparatus according to an embodiment includes a light source that produces illumination light, a spectrophotometer that disperses signal light rays from a sample illuminated with the illumination light and detects the signal light rays by a two-dimensional array photodetector, a fiber unit having a plurality of fibers laid out in an optical path from the sample to the spectrophotometer, the plurality of fibers being adjacently arranged at an entrance end surface of the fiber unit, and the plurality of fibers being arranged in a multi-line shape at intervals at an exit end surface, and a processing unit that, by referring to a layout relationship among the plurality of fibers at the entrance end surface and the exit end surface of the fiber unit, generates a spectroscopic image of the sample from a result of detection by the two-dimensional array photodetector, in which the number of fibers included in a line decreases toward both ends in a direction corresponding to a dispersion direction of the spectrophotometer at the exit end surface of the fiber unit.

In the above-described spectrometry apparatus, the signal light rays from a plurality of spots of the sample may be detected by the spectrophotometer to measure a plurality of spectra, a principal component analysis may be performed on the plurality of spectra to calculate scores of principal components, and components contained in the sample may be discriminated using the scores of the principal component analysis.

In the above-described spectrometry apparatus, signal light rays from a plurality of spots of a reference sample in which the components are known may be detected by the spectrophotometer to find the plurality of pieces of learning data, and supervised learning using the learning data may be performed to calculate a discriminant that discriminates the components.

A spectrometry method according to an embodiment includes steps of producing irradiation light from a light source, spatially modulating the irradiation light from the light source by a spatial light modulator, causing the irradiation light modulated by the spatial light modulator to enter a first fiber unit connected to a portable unit, guiding the irradiation light emitted from the first fiber unit to a sample by an irradiation optical system housed in the portable unit, causing signal light rays from the sample to enter a detection optical system provided in the portable unit, causing the signal light rays propagated through the detection optical system to enter an entrance end surface of a second fiber unit connected to the portable unit, a plurality of fibers being adjacently arranged at the entrance end surface, emitting the signal light rays from an exit end surface of the second fiber unit at which the plurality of fibers are arranged in a multi-line shape at intervals, dispersing the signal light rays emitted from the exit end surface and detecting the signal light rays by a two-dimensional array photodetector, and referring to a layout relationship among the plurality of fibers at the entrance end surface and the exit end surface of the second fiber unit, generating a spectroscopic image of the sample from a result of detection by the two-dimensional array photodetector.

According to the present invention, a spectrometry apparatus which is compact and can subject various samples to spectrometry, and a spectrometry method can be provided.

### Brief Description of Drawings

[Fig. 1] Fig. 1 is a schematic diagram showing a spectrometry apparatus according to a first embodiment.
[Fig. 2] Fig. 2 is a schematic diagram showing a configuration of an irradiation optical system and a detection optical system housed in a portable unit.
[Fig. 3] Fig. 3 is a diagram showing fiber layouts at an entrance end and an exit end of a fiber unit.
[Fig. 4] Fig. 4 is a diagram showing an image of a light receiving surface of a photodetector.
[Fig. 5] Fig. 5 is a diagram for describing processing for identifying an analysis target from measured spectra.
[Fig. 6] Fig. 6 is a diagram for describing an example of the spectrometry apparatus.
[Fig. 7] Fig. 7 is a schematic diagram showing a configuration of a spectrometry apparatus of a second embodiment.
[Fig. 8] Fig. 8 is a schematic diagram for describing a configuration in a case where the number of fibers in each column is the same.
[Fig. 9] Fig. 9 is a schematic diagram for describing a configuration in a case where the number of fibers in each column is different.
[Fig. 10] Fig. 10 is a diagram showing an entrance end and an exit end of a fiber unit as well as a measurement result in a spectrophotometer.
[Fig. 11] Fig. 11 is a diagram showing a measurement result obtained by measuring PE (Polyethylene) and PDMS (Polydimethylsiloxane).
[Fig. 12] Fig. 12 is a diagram showing a laser irradiation pattern and a Raman spectroscopic image.
[Fig. 13] Fig. 13 is a diagram showing a measurement result obtained by measuring PS (polystyrene) and PVC (polyvinyl chloride).
[Fig. 14] Fig. 14 is a flowchart showing a method for discriminating components of a sample.
[Fig. 15] Fig. 15 shows graphs showing a result obtained by subjecting Raman spectra to a principal component analysis.
[Fig. 16] Fig. 16 shows graphs showing principal component scores of a first principal component to a fifth principal component.
[Fig. 17] Fig. 17 is a table for describing a result obtained by discriminating components for each measurement spot.
[Fig. 18] Fig. 18 is a diagram for describing a technique for collectively discriminating a plurality of measurement spots and a result thereof.
[Fig. 19] Fig. 19 is a table for describing a discrimination result when a discrimination threshold is changed in the case of collectively discriminating the plurality of measurement spots.

### Description of Embodiments

Hereinafter, an embodiment to which the present invention is applicable will be described. The following description will describe an embodiment of the present invention, and the present invention is not limited to the following embodiment. For clarification of description, omission and simplification will be made in the following statement as appropriate. A person of ordinary skill in the art will be able to easily change, add, and replace each element in the following embodiment within the scope of the present invention. Note that elements denoted by the same reference character in the respective drawings indicate the same element, and description thereof will be omitted as appropriate.

### First Embodiment

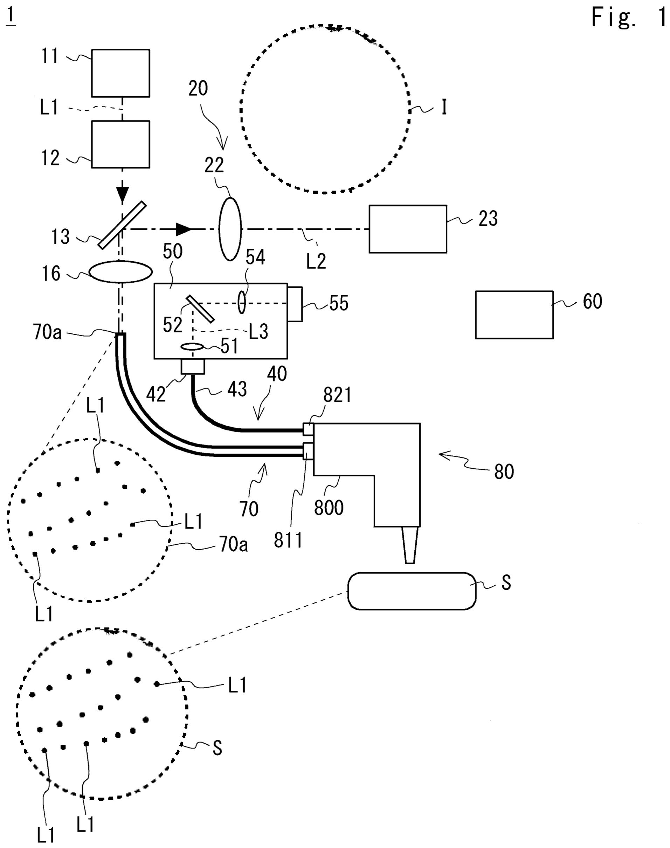

A spectrometry apparatus and a measurement method thereof according to the present embodiment will be described with reference to Fig. 1. Fig. 1 is a schematic diagram showing an overall configuration of a spectrometry apparatus 1. The spectrometry apparatus 1 captures a spectroscopic image of a sample S. More specifically, the spectrometry apparatus 1 measures spectral data on Raman scattered light from the sample S.

The spectrometry apparatus 1 includes a light source 11, a spatial light modulator 12, a dichroic mirror 13, a lens 16, a lens 22, a second fiber unit 40, a spectrophotometer 50, a processing apparatus 60, a first fiber unit 70, and a portable unit 80.

The light source 11 is a laser light source that produces spectrometric illumination light. The spectrometric illumination light will be simply referred to as the irradiation light L1. The light source 11 is a DPSS (Diode Pumped Solid State) laser that emits CW (Continuous Wave) light having a wavelength of 660 nm. It is needless to say that the light source 11 is not limited to a particular type and laser wavelength. In spectrometry, the irradiation light L1 becomes excitation light for exciting the sample S. Therefore, the light source 11 produces the irradiation light L1 which is monochrome.

The irradiation light L1 from the light source 11 enters the spatial light modulator 12. The spatial light modulator 12 spatially modulates the irradiation light L1 based on a control signal from the processing apparatus 60. The spatial light modulator 12 controls a spatial distribution of the irradiation light L1 on the sample S. Accordingly, a region that the irradiation light L1 enters on the sample S can have a desired shape and size. For example, the spatial light modulator 12 modulates the irradiation light L1 so as to illuminate only ROIs (Regions Of Interest) of the sample S.

The spatial light modulator 12 is a liquid crystal panel including pixels arranged in an array shape. The spatial light modulator 12 can modulate the phase of light by controlling a voltage to be applied to each pixel. The spatial light modulator 12 modulates the irradiation light L1 so as to form a desired illumination pattern. Although Fig. 1 depicts the spatial light modulator 12 as a transmission-type liquid crystal device, a reflection-type liquid crystal device such as LCOS (Liquid crystal on silicon) can be used as the spatial light modulator 12. The spatial light modulator 12 is not limited to a liquid crystal device, and DMD or the like can be used.

The irradiation light L1 from the spatial light modulator 12 enters the dichroic mirror 13. The dichroic mirror 13 is a beam splitter that splits the light. The dichroic mirror 13 splits an optical path of the irradiation light L1 and that of observation light L2 which will be described later based on the difference in wavelength. The dichroic mirror 13 transmits the wavelength of the irradiation light L1. The irradiation light L1 transmitted through the dichroic mirror 13 enters the lens 16. The irradiation light L1 enters the first fiber unit 70 through the lens 16.

The first fiber unit 70 is a bundle fiber formed by binding a plurality of fibers. The first fiber unit 70 is an image fiber that transfers an image at the entrance end to the exit end. The first fiber unit 70 has flexibility.

The lens 16 forms an image of the illumination pattern, which is formed by the spatial light modulator 12, at an entrance end surface 70a of the first fiber unit 70. At the entrance end surface 70a of the first fiber unit 70, the irradiation light L1 enters some fibers in accordance with the illumination pattern. That is, the irradiation light L1 enters only fibers corresponding to ROIs, and the irradiation light L1 does not enter fibers other than the ROIs.

The irradiation light L1 having entered the first fiber unit 70 at the entrance end surface 70a propagates through each fiber of the first fiber unit 70. The exit end of the first fiber unit 70 is connected to the portable unit 80. Specifically, the exit end of the first fiber unit 70 is coupled to a first port 811 of a portable enclosure 800 of the portable unit 80.

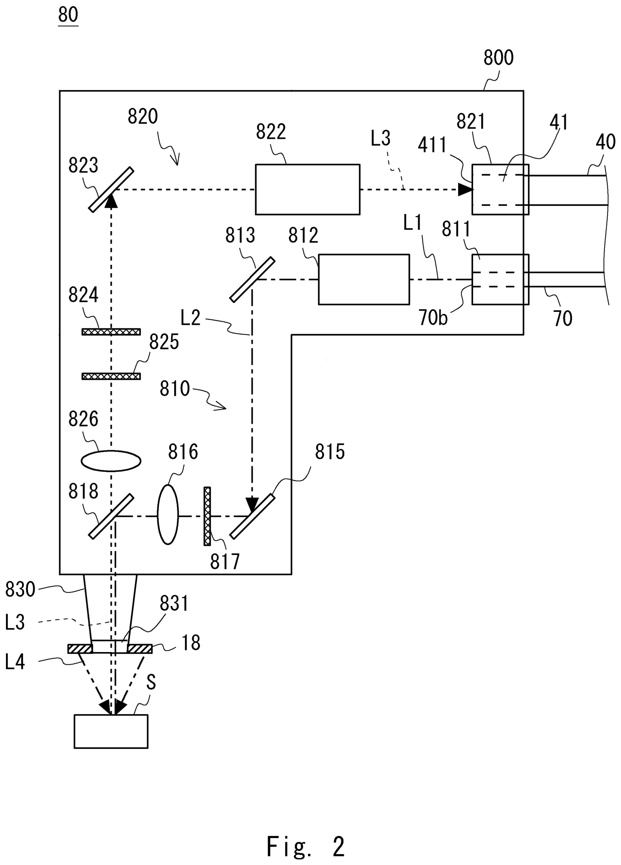

The portable unit 80 includes the portable enclosure 800, an irradiation optical system 810, and a detection optical system 820 as shown in Fig. 2. The irradiation optical system 810 and the detection optical system 820 are housed in the portable enclosure 800. The portable unit 80 has a size of approximately 14 cm × 16 cm × 4 cm. Therefore, the portable unit 80 has a handheld size. The portable unit 80 has a field of view of approximately 5 mm. Hereinafter, the irradiation optical system 810 will be described.

The irradiation optical system 810 includes a lens 812, a mirror 813, a mirror 815, a lens 816, a filter 817, and a dichroic mirror 818. The lens 812, the mirror 813, the mirror 815, the lens 816, the filter 817, and the dichroic mirror 818 are fixed to the portable enclosure 800.

The first port 811 and a second port 821 are provided in one side surface of the portable enclosure 800. The first fiber unit 70 is connected to the first port 811. The first fiber unit 70 is fixed to the first port 811 in a state extending along the direction of an optical axis of the lens 812.

The irradiation light L1 emitted from an exit end surface 70b of the first fiber unit 70 enters the mirror 813 through the lens 812. The irradiation light L1 is reflected off the mirror 813 and the mirror 815 and enters the filter 817. The irradiation light L1 transmitted through the filter 817 enters the lens 816. The lens 816 forms an image at the exit end of the first fiber unit 70 on the sample S. The irradiation light L1 from the lens 816 enters the dichroic mirror 818. The filter 817 is, for example, a short pass filter having a cutoff wavelength longer than a laser wavelength of the light source 11. Thus, it is possible to prevent the sample S from being irradiated with light having a wavelength longer than the laser wavelength during spectrometry and prevent such light from being detected by the spectrophotometer. The filter 817 transmits the observation light L2 which will be described later.

The dichroic mirror 818 is a beam splitter that separates signal light rays from the irradiation light L1 and the observation light which will be described later in accordance with the wavelength. For example, the dichroic mirror 818 reflects light having the laser wavelength of the irradiation light L1 and transmits light having the wavelength of signal light rays. Therefore, the dichroic mirror 818 reflects the irradiation light L1 toward the sample S. The irradiation light L1 reflected off the dichroic mirror 818 passes through a cylindrical leading end 830 and is emitted to the outside of the portable enclosure 800.

The leading end 830 may be provided with a transparent window 831. The window 831 is a parallel plate of sapphire, calcium fluoride, quartz, or the like. The use of these materials can reduce light emission produced at the window 831. By appropriately selecting the window 831 from among them, Raman scattered light produced from the window 831 is separated from Raman scattered light produced from the sample in accordance with the wavelength. The window 831 is provided for protecting the dichroic mirror 818 and the like. The window 831 is provided at the leading end 830 so as to be replaceable. For example, in a case where the window 831 gets dirty, the dirty window 831 is removed, and a new window 831 is attached. This can prevent contamination of the dichroic mirror 818. Thus, operations of replacing components such as the dichroic mirror 818 and adjusting the optical system can be omitted. The leading end 830 and the window 831 may be integrated to make the whole leading end 830 replaceable.

The irradiation light L1 transmitted through the window 831 enters the sample S. The irradiation optical system 810 forms an image at the exit end surface 70b of the first fiber unit 70 on the sample S. Therefore, on the sample S, only the ROIs are irradiated with the irradiation light L1 as shown in Fig. 1.

The position at which the irradiation light L1 enters is controlled by the spatial light modulator 12. When the processing apparatus 60 controls the spatial light modulator 12, the position on the sample S at which the irradiation light L1 enters can be controlled. That is, when the processing apparatus 60 controls the spatial light modulator 12, only the ROIs on the sample S can be illuminated.

As shown in Fig. 2, the portable unit 80 may be provided with the observation illumination light source 18. For example, the observation illumination light source 18 is provided for the portable unit 80 so as to be located toward the sample S. Herein, the observation illumination light source 18 is laid out on the outer peripheral side of the leading end 830. The observation illumination light source 18 emits observation illumination light L4 toward the sample S for illuminating the sample S. The observation illumination light source 18 is, for example, a ring lighting such as an LED and has an annular shape. A non-monochrome light source can be used as the observation illumination light source 18. The observation illumination light source 18 is laid out in the vicinity of the sample S and illuminates the sample S. Note that the observation illumination light source 18 is not limited to the ring lighting. The observation illumination light source 18 may be installed other than the portable unit 80. As shown in a second embodiment, for example, the observation illumination light source 18 may irradiate the sample S with the observation illumination light L4 in a diagonal direction. It may be configured such that the wavelength of the observation illumination light L4 and the wavelength range of Raman scattered light produced at the sample S are not overlapped. With such a configuration, the spectrophotometer 50 can measure the Raman scattered light from the sample S in a state where the observation illumination light source 18 illuminates the sample S.

Part of the observation illumination light L4 is reflected/scattered by the sample S to propagate through the irradiation optical system 810. The light reflected/scattered by the sample S to propagate through the irradiation optical system 810 becomes the observation light L2 in Fig. 1. The observation light L2 propagates through the irradiation optical system 810 along an optical path opposite to that of the irradiation light L1. Specifically, the observation light L2 is transmitted through the window 831 and enters the dichroic mirror 818. The observation light L2 reflected off the dichroic mirror 818 enters the mirror 815 through the lens 816 and the filter 817. The observation light L2 is reflected off the mirror 815 and the mirror 813 and enters the lens 812. The observation light L2 forms an image at the exit end surface 70b of the first fiber unit 70 because of the lens 812.

The observation light L2 propagates through the first fiber unit 70 and is emitted from the entrance end surface 70a of the first fiber unit 70. The observation light L2 is emitted from the first fiber unit 70 and enters the dichroic mirror 13 through the lens 16 as shown in Fig. 1. The observation light L2 reflected off the dichroic mirror 13 forms an image on a camera 23 because of the lens 22. The camera 23 thereby captures an optical image I of the sample.

The lens 22 is an image-forming lens and forms an image at the entrance end surface 70a on a light receiving surface of the camera 23. The camera 23 is a two-dimensional photodetector such as a CCD (Charge Coupled Device) camera or a CMOS (Complementary Metal Oxide Semiconductor) image sensor. Therefore, the camera 23 can capture a two-dimensional optical image I of the sample S.

The processing apparatus 60 is an information processing apparatus such as a personal computer. The camera 23 outputs captured data on the optical image I of the sample S to the processing apparatus 60. The processing apparatus 60 stores the captured data on the optical image I in a memory or the like. That is, the processing apparatus 60 stores luminance data in accordance with a light receiving amount per pixel of the camera 23. The processing apparatus 60 has a display that displays the optical image, and the like.

A user can extract an ROI on the sample S by checking the optical image captured by the camera 23. For example, the user can select the ROI on a display screen of the processing apparatus 60. Accordingly, coordinates on the optical image are specified. The processing apparatus 60 controls the spatial light modulator 12 so as to illuminate the ROI specified by the user with the irradiation light L1. Only a desired ROI can thereby be illuminated. The processing apparatus 60 may extract an ROI from an optical image using general-purpose image processing. The processing apparatus 60 may extract an ROI according to an algorithm for detecting a target having a specific spatial distribution. For example, the processing apparatus 60 extracts an elongated shape such as a nerve through image processing and sets the elongated shape as an ROI.

Next, the detection optical system 820 to serve as an optical path of signal light rays will be described. As shown in Fig. 2, the detection optical system 820 includes the dichroic mirror 818, a lens 826, a filter 825, a filter 824, a mirror 823, and a lens 822.

When the sample S is irradiated with the irradiation light L1, the signal light rays L3 are produced. The signal light rays L3 produced at the sample S enter the dichroic mirror 818 through the window 831. That is, the signal light rays L3 pass through a hollow portion of the leading end 830 and enter into the portable enclosure 800. The signal light rays L3 are transmitted through the dichroic mirror 818 and enter the lens 826. The signal light rays L3 from the lens 826 enter the filter 825 and the filter 824.

The filter 824 and the filter 825 are optical filters and transmit part of the signal light rays L3 from the sample S. The filters 824 and 825 are wavelength filters that transmit or shield light in accordance with the wavelength. Specifically, the filter 825 is an edge filter that shields light having a laser wavelength. This can prevent the signal light rays L3 having a wavelength different from the laser wavelength from being superimposed in the spectrophotometer 50 to which the second fiber unit 40 which will be described later is connected. The filter 824 is a bandpass filter and transmits light in a predetermined wavelength band. The filter 824 restricts a measurement wavelength range of the signal light rays L3 in the spectrophotometer 50.

The signal light rays L3 transmitted through the filter 824 are reflected off the mirror 823 and enter the lens 822. The signal light rays L3 from the lens 822 enter the second fiber unit 40. The lens 822 is an image-forming lens and forms an image of the sample S at an entrance end surface 411 of the second fiber unit 40. That is, the entrance end surface 411 of the second fiber unit 40 is laid out at a position conjugate to the sample S.

The second fiber unit 40 is connected to the second port 821. The second fiber unit 40 is fixed to the second port 821 in a state extending along the direction of an optical axis of the lens 822.

The second fiber unit 40 is a bundle fiber formed by binding a plurality of fibers. The second fiber unit 40 is laid out in an optical path from the portable unit 80 to the spectrophotometer 50. The second fiber unit 40 includes an entrance-side holder 41, an exit-side holder 42, and a connecting section 43. The entrance-side holder 41 is put in the second port 821. The second fiber unit 40 has different fiber layouts at the entrance end surface and the exit end surface.

The entrance-side holder 41 is a cylindrical holder, for example, and houses a plurality of fibers therein. The entrance-side holder 41 fixes the plurality of fibers at the entrance end surface 411 side of the second fiber unit 40. Therefore, the plurality of fibers are adjacently arranged at the entrance end surface 411 side of the second fiber unit 40. Specifically, the plurality of fibers have a close-packed arrangement (a fine pitch arrangement or a dense arrangement).

The exit-side holder 42 is a cylindrical holder, for example, and houses a plurality of fibers therein. The exit-side holder 42 fixes the plurality of fibers at the exit end surface side of the second fiber unit 40. At the exit end side of the second fiber unit 40, the plurality of fibers are arranged in a multi-line shape at intervals. This enables spectrometry in the multifocal optical system.

The connecting section 43 connects the entrance-side holder 41 and the exit-side holder 42. The connecting section 43 is a flexible portion laid out between the entrance-side holder 41 and the exit-side holder 42. A configuration of the second fiber unit 40 will be described later.

The exit end of the second fiber unit 40 is laid out at an entrance surface of the spectrophotometer 50. The signal light rays L3 propagated through the fibers of the second fiber unit 40 is emitted from the exit end of the second fiber unit 40 and enter the spectrophotometer 50. The signal light rays L3 from the sample S enter the spectrophotometer 50 through the second fiber unit 40.

The spectrophotometer 50 includes a lens 51, a grating 52, a lens 54, and the photodetector 55. The signal light rays L3 from the second fiber unit 40 enter the lens 51. The lens 51 refracts the signal light rays L3 so as to be a parallel light bundle. The signal light rays L3 from the lens 51 enter the grating 52. The grating 52 is a wavelength dispersion element that disperses the signal light rays L3 in accordance with the wavelength. The grating 52 has a diffraction angle in accordance with the wavelength. A direction of dispersing the signal light rays L3 by the grating 52 is referred to as an X direction.

Since the grating 52 is herein shown as a transmission-type diffraction grating, the signal light rays L3 reflected off the grating 52 enter the lens 54. Note that the wavelength dispersion element is not limited to the transmission-type diffraction grating, and may be a reflection-type diffraction grating, a prism, or the like.

The signal light rays L3 subjected to wavelength dispersion by the grating 52 enter the lens 54. The lens 54 focuses the signal light rays L3 on a light receiving surface of the photodetector 55. The photodetector 55 is a two-dimensional array photodetector such as a CCD (Charge Coupled Device) camera or a CMOS (Complementary Metal Oxide Semiconductor) image sensor. The photodetector 55 has a plurality of pixels arranged in the X direction and a Y direction, for example. Note that the X direction and the Y direction are directions orthogonal to an optical axis of the optical system. That is, the XY plane is a plane orthogonal to the optical axis. It is needless to say that the X direction and the Y direction, which are pixel arranging directions, may not be directions orthogonal to the Z direction. That is, a light collecting surface provided by the lens 54 may not be a plane orthogonal to the optical axis.

In a case in which the wavelength dispersion direction is the X direction, an X coordinate of the photodetector 55 corresponds to the wavelength and spatial positions of the signal light rays L3. An image at the exit end of the second fiber unit 40 is formed on the light receiving surface of the photodetector 55. Information about a spectroscopic image of the sample S dispersed by the spectrophotometer 50 can be acquired by the photodetector 55.

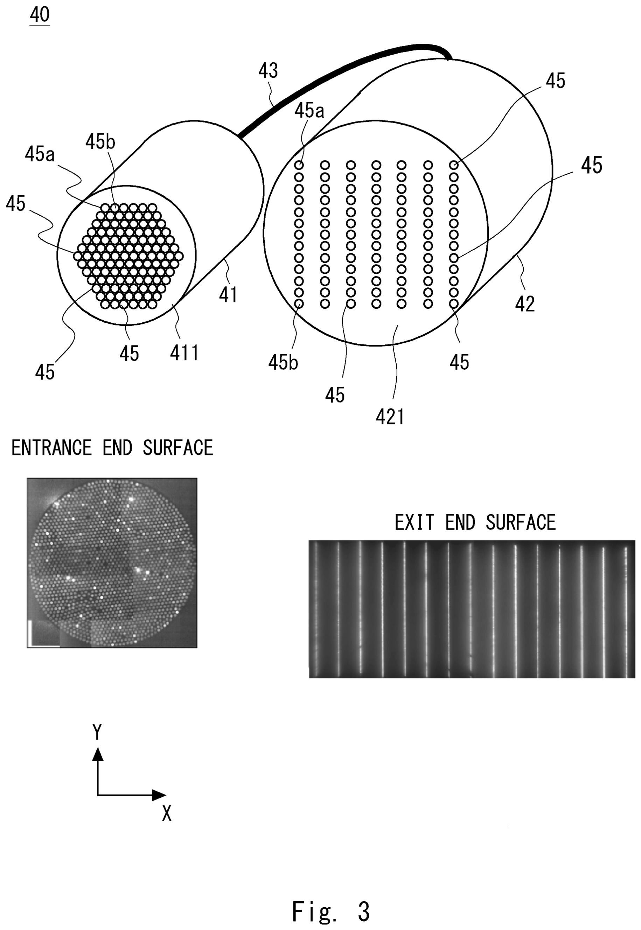

Next, the configuration of the second fiber unit 40 will be described with reference to Fig. 3. Fig. 3 is a diagram schematically showing the configuration of the second fiber unit 40.

The second fiber unit 40 has a plurality of fibers 45. The entrance-side holder 41 fixes the plurality of fibers 45 at the entrance end surface 411 of the second fiber unit 40. The plurality of fibers 45 are adjacently arranged at the entrance end surface 411 of the second fiber unit 40. For example, a coating of the fiber 45 is laid out to come into contact with the coating of an adjacent fiber 45. The fibers 45 have a circular outer shape including the coating, and a plurality of the fibers 45 are arranged such that each circle comes into contact with adjacent circles.

The entrance end surface 411 is located at a position conjugate to the sample S. An image of the sample S is formed at the entrance end surface 411. In other words, the signal light rays L3 from one light-irradiated spot on the sample enter one or more of the fibers 45. By arranging the fibers 45 so as to be proximate to one another, gaps among the fibers 45 can be reduced.

Accordingly, a region on the sample S which cannot be subjected to spectrometry can be reduced. If the signal light rays L3 from the sample S enter the gaps among the fibers 45, the signal light rays L3 do not reach the spectrophotometer 50. When the fibers 45 have a close-packed layout, the gaps among the fibers 45 can be reduced in area. Thus, the region which cannot be subjected to spectrometry can be reduced.

Non Patent Literature 5 (https://www.tem-inc.co.jp/products/detail-29.php) discloses a technology for numbering a plurality of fibers to perform mapping. By using this technology, the gaps among the fibers can be eliminated, or the fibers can be laid out with fewer gaps. By subjecting the fibers to fusion treatment, a honeycomb structure is obtained, so that the gaps among the fibers are eliminated. Alternatively, adjacent fibers may be bonded with an adhesive agent such as epoxy resin.

In more detail, at the entrance end surface 411, one thousand and eight hundred fibers 45 have a two-dimensional close-packed arrangement (fine pitch or dense arrangement). The plurality of fibers 45 have a hexagonal close-packed arrangement. Thus, one fiber 45 is arranged to come into contact with surrounding six fibers 45. In other words, each of the plurality of fibers 45 is in contact with six fibers 45. Furthermore, the fibers 45 are not arranged in a matrix shape. That is, two arranging directions at the entrance end surface 411 are not orthogonal.

The entrance-side holder 41 holds the fibers 45 at the entrance end surface 411 of the second fiber unit 40 such that the plurality of fibers 45 have a close-packed layout. That is, the entrance-side holder 41 fixes the plurality of fibers 45 such that the fibers 45 are adjacently arranged. With such a configuration, the sample S can be subjected to spectrometry more appropriately.

A spectroscopic image at an exit end surface 421 is formed on the light-receiving surface of the photodetector 55. The plurality of fibers 45 are arranged in a multi-line shape at intervals at the exit end surface 421. At the exit end surface 421, the exit-side holder 42 holds the plurality of fibers 45 such that the plurality of fibers 45 are arranged at intervals from one another.

The plurality of fibers 45 are arranged in the X direction and the Y direction at the exit end surface 421. The plurality of fibers 45 are arranged in a two-dimensional matrix shape. The two arranging directions at the exit end surface 421 are not orthogonal. The plurality of fibers 45 are arranged at regular intervals in the X direction. Similarly, the plurality of fibers 45 are arranged at regular intervals in the Y direction. As described, the exit-side holder 42 holds the plurality of fibers 45 such that the plurality of fibers 45 are arranged at constant intervals.

The one thousand and eight hundred fibers 45 are arranged in a 15 × 120 matrix shape. That is, the fibers 45 are arranged in a multi-line shape of fifteen lines, and one hundred and twenty fibers 45 are included in one line. The one hundred and twenty fibers 45 included in one line are laid out in parallel in the Y direction.

Specifically, the one thousand and eight hundred fibers 45 are laid out at the entrance end surface 411 in a circular region having a diameter of approximately 2 to 3 mm. One fiber 45 has a core diameter of 40 µm and a cladding diameter of 48 µm. A circular region having a diameter of approximately 80 µm is detected on the sample S by the photodetector 55. That is, the circular region having a diameter of approximately 80 µm is scaled down to form an image on the entrance end surface 411 of the second fiber unit 40. Thus, the signal light rays L3 from a circular region having a diameter of 4 to 6 mm are detected by the photodetector 55 simultaneously.

At the exit end surface 421, the one thousand and eight hundred fibers 45 are laid out in a rectangular region of approximately 14 to 15 cm in the X direction and approximately 6 to 7 cm in the Y direction. Note that multiple slits corresponding to the multiple lines may be provided in the exit end surface 421.

The exit-side holder 42 fixes the plurality of fibers 45 such that the plurality of fibers 45 are arranged at intervals at the exit end surface 421. The density of the plurality of fibers 45 at the entrance end surface 411 is higher than the density of the plurality of fibers 45 at the exit end surface 421. In other words, the fibers 45 are sparsely laid out at the exit end surface 421, and the fibers 45 are closely laid out at the entrance end surface 411.

Specifically, it is preferable that the fibers 45 should have a density of 60% or greater in the region in which the fibers 45 are arranged. That is, the fibers 45 are closely laid out such that an area of 60% or greater is occupied by the fibers 45 in the region in which the fibers 45 are arranged. In other words, it is preferable that a region of the gaps among the fibers 45 should be less than 40%. It is more preferable that the fibers 45 should have a density of 75% or greater in the region in which the fibers 45 are arranged. In this case, the fibers 45 are closely laid out such that an area of 75% or greater is occupied by the fibers 45 in the region in which the fibers 45 are arranged. It is preferable that the region of the gaps among the fibers 45 should be less than 25%.

With such a configuration, the signal light rays L3 are emitted from adjacent ones of the fibers 45 and enter the photodetector 55 without being overlapped. That is, the signal light rays L3 from different ones of the fibers 45 are detected by different pixels of the photodetector 55. With such a configuration, a spectroscopic image can be appropriately measured.

The signal light rays L3 emitted from the second fiber unit 40 as described above are dispersed by the spectrophotometer 50. Herein, a dispersing direction in the spectrophotometer 50 shall be the X direction. A pixel address in the X direction in the photodetector 55 indicates a spectroscopic wavelength and a spatial position. A pixel address in the Y direction indicates a position on the multiple lines.

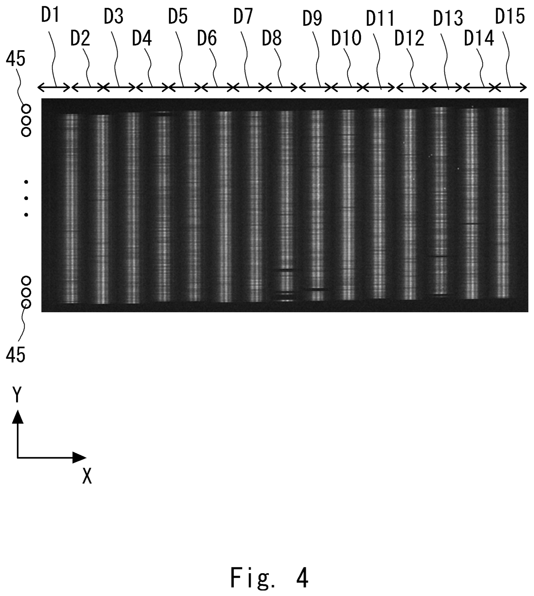

The light receiving surface of the photodetector 55 will be described with reference to Fig. 4. Fig. 4 is a diagram showing an image at the light receiving surface of the photodetector 55. Pixels of the photodetector 55 are arranged such that arranging directions are the X direction and the Y direction. Fig. 4 also schematically shows the fibers 45 included in one line. Herein, the arranging direction of the fibers 45 included in one line is in parallel to the Y direction. An arranging direction of a plurality of lines is in parallel to the X direction. Thus, the arranging direction of the fibers 45 and a pixel arranging direction are parallel. In addition, the direction of dispersing by the grating 52 is the X direction.

Therefore, spectral data in the fibers 45 in one line is measured by a strip-shaped detection region at the light receiving surface. In Fig. 4, a detection region in which spectral data in the fibers 45 included in the first line is measured is shown as a detection region D1. Similarly, detection regions in which spectral data in the fibers 45 in the second to fifteenth lines is measured are shown as detection regions D2 to D15, respectively. Since one hundred and twenty fibers 45 are included in one line, one hundred and twenty pieces of spectral data can be measured in the one detection region D1.

The detection regions D1 to D15 are laid out so as not to be overlapped on one another. For example, the detection region D1 and the detection region D2 are offset in the Y direction. The spectrophotometer 50 shall disperse signal light rays on a long-wavelength side to the +X side and the signal light rays L3 on a short-wavelength side to the -X side. A pixel address corresponding to the longest wavelength in the detection region D1 is located on the -X side relative to a pixel address corresponding to the shortest wavelength in the detection region D2. Specifically, the filter 31 restricts a wavelength range of the signal light rays L3 such that the detection regions D1 to D15 are not overlapped. The gap among the fibers 45 in the X direction at the exit end surface 421 shall be a predetermined value or greater.

The fibers 45 are laid out separately from one another at the exit end surface 421. As shown in Fig. 3, for example, the fibers 45 included in one line are laid out at intervals in the Y direction. Thus, the signal light rays L3 from adjacent ones of the fibers 45 enter pixels having different addresses in the Y direction. The signal light rays L3 from the respective fibers 45 are detected by different pixels. In other words, the signal light rays L3 from one of the fibers 45 does not enter a pixel that the signal light rays L3 from another one of the fibers 45 enters.

With such a design, the signal light rays L3 from the respective fibers 45 are detected without being overlapped. Thus, Raman spectra at a plurality of spots on the sample S can be measured with a single shot (a single frame) of the photodetector 55 without scanning the sample S with the irradiation light L1. Accordingly, Raman scattered light from the two-dimensional region on a plane orthogonal to the optical axis can be detected.

Alternatively, some of the signal light rays from the respective fibers 45 may be detected in an overlapped manner. In this case, original spectra can be restored by a mathematical technology such as a compression sensing technology. In this case, the signal light rays L3 from one of the fibers 45 can be subjected to wavelength dispersion to a larger number of pixels. Thus, the wavelength range that can be subjected to spectrometry can be widened. Alternatively, wavelength resolution can be improved.

The signal light rays L3 from the respective fibers 45 can be independently subjected to spectrometry. The signal light rays L3 from one thousand and eight hundred spots on the sample S can be simultaneously subjected to spectrometry. In other words, a two-dimensional spectroscopic image of one thousand and eight hundred pixels can be captured in a short time. The signal light rays L3 from any one light-irradiated spot (a single location) on the sample S enter one of the fibers 45. A spectrum of the signal light rays L3 emitted from the one of the fibers 45 correspond to spectral data on the one light-irradiated spot (the single location) on the sample S.

For example, the second fiber unit 40 has the one thousand and eight hundred fibers 45. Thus, the spectrometry apparatus 1 can detect one thousand and eight hundred Raman spectra. That is, the spectrometry apparatus 1 can subject the signal light rays L3 from one thousand and eight hundred spots on the sample S to spectrometry, respectively. The processing apparatus 60 generates a spectroscopic image of the sample S based on a detection signal of the photodetector 55. That is, a spectroscopic image is generated based on one thousand and eight hundred pieces of spectral data. Hereinafter, a process of generating a spectroscopic image by the processing apparatus 60 will be described.

As described above, the entrance-side holder 41 and the exit-side holder 42 are connected by the connecting section 43. The connecting section 43 is obtained by binding the plurality of fibers 45 in a deformable manner. A correspondence relationship between the position of each of the fibers 45 at the entrance end surface 411 and the position of each of the fibers 45 at the exit end surface 421 is already known. For example, for a certain fiber 45a, the position at the entrance end surface 411 and the position at the exit end surface 421 are associated. Similarly, for another fiber 45b, the position at the entrance end surface 411 and the position at the exit end surface 421 are associated.

As described, the position at the exit end surface 421 of the fiber 45 located at any position at the entrance end surface 411 is already known. The processing apparatus 60 stores information indicating a layout relationship of each of the fibers 45. That is, the processing apparatus 60 stores the correspondence relationship between the position of the fiber 45 at the entrance end surface 411 and its position at the exit end surface 421. Referring to the layout relationship of each of the fibers 45, the processing apparatus 60 generates a spectroscopic image from a result of detection by the photodetector 55. The processing apparatus 60 rearranges detected data for each of pixels of the photodetector 55 so as to conform with the fiber arrangement at the entrance end surface 411. As described, the processing apparatus 60 creates a two-dimensional spectroscopic image by two-dimensional mapping.

As described, the fibers 45 are arranged at the entrance end surface 411 more closely than at the exit end surface 421. Therefore, the photodetector 55 can detect the signal light rays L3 from a larger number of spots on the sample S. For positions on the sample corresponding to the region in which the fibers 45 have the close-packed arrangement, the signal light rays propagate through any of the fibers 45 and are detected by the photodetector 55.

Since the fibers 45 are arranged in the multi-line shape at the exit end surface 421, the spectrophotometer 50 can subject the signal light rays L3 from the plurality of fibers 45 to spectrometry simultaneously. That is, the signal light rays L3 emitted from the fiber 45 is detected independently from the signal light rays L3 emitted from another one of the fibers 45. Accordingly, the spectrophotometer 50 can subject the signal light rays L3 from a larger number of the fibers 45 to spectrometry. Moreover, the arrangement in the multi-line shape enables a larger number of spots to be measured.

The spectrometry apparatus 1 can capture a two-dimensional spectroscopic image without scanning the sample S with laser light. Thus, a Raman spectroscopic image can be measured in a short time. Irradiation of only ROIs with laser enables measurement at low phototoxicity. The unnecessity to label the sample S with a fluorescent material or the like enables label-free spectrometry. The signal light rays L3 from the respective fibers 45 are separately detected. With such a configuration, spatial spectrometry can be performed without crosstalk.

Furthermore, the spectrometry apparatus 1 can subject various samples to spectrometry because of the use of the portable unit 80. The portable unit 80 is connected to the second fiber unit 40 and the first fiber unit 70 having flexibility. A user can install the portable unit 80 at a desired position in a desired orientation. That is, the user can bring the portable unit 80 closer to the various samples S. The portable unit 80 can be installed not only toward a minute sample S that can be laid out on a stage of a microscope but also toward a human being or the like. That is, the user should only fix the portable unit 80 toward the sample S. The user is able to subject various samples to spectrometry with the spectrometry apparatus 1 having a simple configuration.

Next, a spectrometry method in the spectrometry apparatus will be described. First, an optical image is captured through optical observation with the camera 23 prior to spectrometry. In the optical observation, the observation illumination light L4 from the observation illumination light source 18 illuminates an overall field of view of a lens 816. A user or the processing apparatus 60 extracts a plurality of spots on a sample as ROIs based on the optical image. For example, the processing apparatus 60 displays the optical image on a monitor. The user designates a region of interest with a mouse or the like while looking at the optical image on the monitor. The processing apparatus 60 stores coordinates of the designated region. Accordingly, the ROIs are extracted.

Note that the observation illumination light L4 for capturing the optical image is light from a light source different from the light source of the irradiation light L1 at the time of spectrometry. That is, the observation illumination light source 18 and the light source 11 can be switched for use at the time of capturing an optical image and at the time of spectrometry.

The spatial light modulator 12 controls a beam of the irradiation light L1 from the light source 11 so as to selectively illuminate the ROIs on the sample S. The spatial light modulator 12 modulates the irradiation light L1 such that the irradiation light L1 enters only the ROIs. In other words, the spatial light modulator 12 modulates the irradiation light L1 such that a place other than the ROIs is not irradiated with the irradiation light L1. Accordingly, a plurality of spots extracted as the ROIs are simultaneously illuminated.

The processing apparatus 60 generates a binary image for controlling the spatial light modulator 12. In the binary image, 1 is assigned to the positions to be the ROIs, and 0 is assigned to the positions other than the ROIs, for example. The processing apparatus 60 outputs, to the spatial light modulator 12, data about a computer-generated hologram (CGH) obtained by subjecting a binary image for control to Fourier transform. The processing apparatus 60 thus outputs the hologram to the spatial light modulator 12. The spatial light modulator 12 includes a plurality of control pixels and diffracts entering light. The spatial light modulator 12 can control the phase of diffracted wave per pixel.

By using the spatial light modulator 12, multiple foci can be formed on any plurality of spots on the sample S. That is, since the irradiation light L1 is focused only on the ROIs, Raman scattered light can be prevented from being produced in the place other than the ROIs. This enables measurement at a high SN ratio and measurement with less spatial crosstalk. Since the place other than the ROIs is not irradiated with light, phototoxicity on the sample S can be lessened.

Connective tissues and nerves of a biological sample are extracted as ROIs. Thus, the spatial light modulator 12 modulates the irradiation light L1 such that only the connective tissues and nerves are selectively illuminated. The signal light rays L3 from the ROIs enter the spectrophotometer 50 through the detection optical system 820 and the second fiber unit 40. The spectrophotometer 50 subjects the signal light rays L3 from the locations illuminated with the irradiation light L1 to spectrometry. The processing apparatus 60 generates a spectroscopic image based on a result of spectral measurement of the spectrophotometer 50.

### Example 1

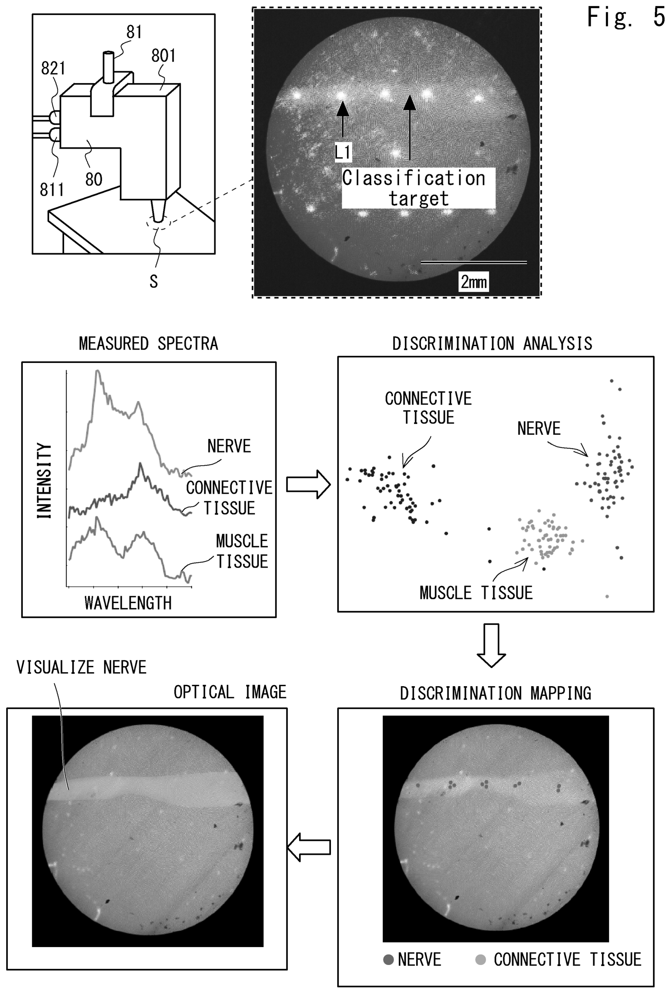

Fig. 5 is a diagram for describing Example 1 of the spectrometry apparatus. In Fig. 5, a holding mechanism 81 that holds the portable unit 80 is provided. The sample S is laid out on a table, for example. The holding mechanism 81 holds the portable unit 80 on the sample S. Accordingly, the position of the portable unit 80 on the sample S is fixed.

The sample S is a tissue harvested from a rat, for example. The sample S contains nerves, muscle tissues, connective tissues, and the like. Nerves, muscle tissues, and connective tissues are extracted as identification targets by observation of an optical image. The nerves, muscle tissues, and connective tissues as ROIs are selectively irradiated with the irradiation light L1.

The spectrometry apparatus 1 measures spectroscopic spectra of Raman scattered light for each ROI. The processing apparatus 60 analyzes the spectroscopic spectra to discriminate among the nerves, muscle tissues, and connective tissues. The processing apparatus 60 can map a discrimination result on the optical image I to be displayed on a monitor. The processing apparatus 60 can visualize and display the nerves. The nerves and the connective tissues/muscle tissues can be identified at an accuracy of 96.7% and a sensitivity of 100%, for example.

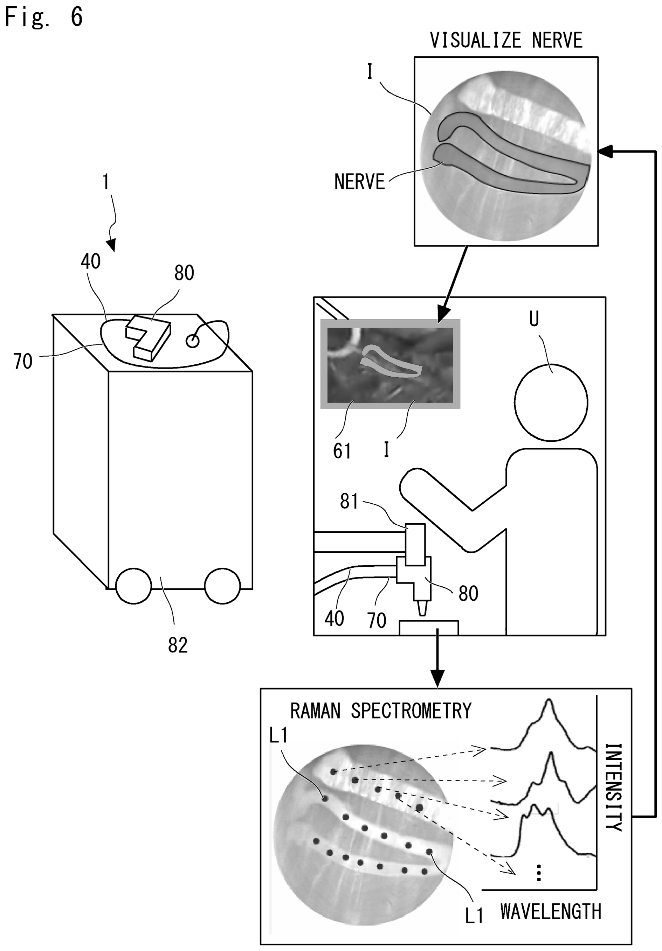

Fig. 6 is a schematic diagram showing an implementation example of the spectrometry apparatus 1 of Example 1. The spectrometry apparatus 1 includes a main body 82. The light source 11, the spatial light modulator 12, the dichroic mirror 13, the lens 16, the lens 22, the camera 23, the spectrophotometer 50, and the like shown in Fig. 1 are laid out in the main body 82. Herein, the main body 82 has a wagon with wheels. The second fiber unit 40 and the first fiber unit 70 are provided between the main body 82 and the portable unit 80.

A user U can utilize the spectrometry apparatus 1 for a diagnosis, an examination, and a surgery for a human being or an animal. The user U can utilize the portable unit 80 as a small probe for viewing an affected area. The main body 82 is installed near a surgical table. The user can thereby move the spectrometry apparatus 1 freely in a surgery room. The holding mechanism 81 is an arm mechanism that holds the portable unit 80 on an opening of a surgery target. The portable unit 80 irradiates the affected area and the like with the irradiation light L1.

As described with reference to Fig. 5, the processing apparatus 60 identifies nerves, muscle tissues, and connective tissues based on Raman spectroscopic spectra. A monitor 61 displays the optical image I captured by the camera 23. The monitor 61 visualizes and displays nerves. For example, the processing apparatus 60 can add a desired color to the nerves for highlighting. The user as an operator can specify the position of the nerves. A measurement result of the spectrometry apparatus 1 can assist the user U in making a decision. Thus, a medical diagnosis, an examination, and a surgery to be performed by the user can be appropriately assisted.

### Second Embodiment

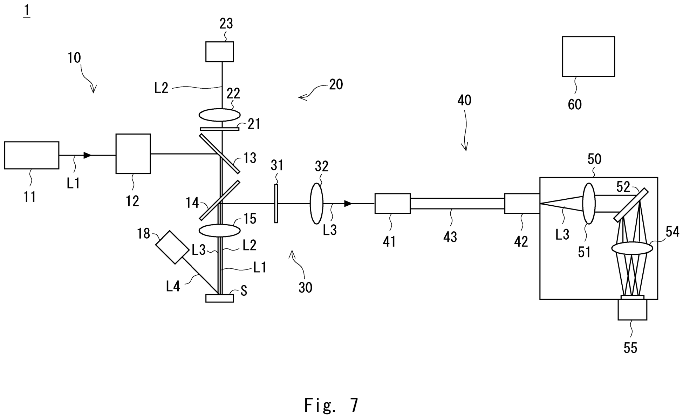

A configuration of the spectrometry apparatus 1 according to a second embodiment will be described using Fig. 7. Fig. 7 is a schematic diagram showing an overall configuration of the spectrometry apparatus 1. The spectrometry apparatus 1 includes the spectroscopic illumination optical system 10, the observation illumination light source 18, the observation optical system 20, the spectrometric optical system 30, the second fiber unit 40, the spectrophotometer 50, and the processing apparatus 60. Note that the second fiber unit 40, the spectrophotometer 50, the processing apparatus 60, and the like will be omitted from description as appropriate, as they are similar to those of the first embodiment. The present embodiment is different from the first embodiment in that the portable unit 80 and the first fiber unit 70 are not provided.

First, the spectroscopic illumination optical system 10 will be described. The spectroscopic illumination optical system 10 is an optical system for guiding the irradiation light L1 to the sample S. The spectroscopic illumination optical system 10 includes the light source 11, the spatial light modulator 12, the dichroic mirror 13, the dichroic mirror 14, and a lens 15. The light source 11, the spatial light modulator 12, and the dichroic mirror 13 will be omitted from description, as they are similar to those of the first embodiment. The dichroic mirror 13 reflects the irradiation light L1 toward the dichroic mirror 14.

The dichroic mirror 14 splits light in accordance with the wavelength. The dichroic mirror 14 transmits the wavelength of the irradiation light L1. Thus, the irradiation light L1 transmitted through the dichroic mirror 14 enters the lens 15. The lens 15 is an objective lens and focuses the irradiation light L1 on the sample S. Accordingly, the sample S is illuminated with the irradiation light L1. The irradiation light L1 has been modulated by the spatial light modulator 12. Thus, the irradiation light L1 can illuminate a desired region on the sample S. Note that the sample S is placed on a stage not shown or the like. The stage may be a driven stage in order to change the illuminated position of the sample S.

Next, the observation illumination light source 18 and the observation optical system 20 will be described. The observation illumination light source 18 is a lamp light source, for example, and produces white observation illumination light L4. The observation illumination light L4 from the observation illumination light source 18 illuminates the sample S. It is needless to say that the observation illumination light source 18 is not limited to the white lamp light source. A non-monochrome light source can be used as the observation illumination light source 18.

The observation optical system 20 is an optical system for guiding observation light L2 from the sample S to a camera 23. The observation light L2 is light from a region illuminated with the observation illumination light L4. For example, the observation light L2 is scattered light scattered by the sample S, reflected light reflected off the sample S, fluorescence produced from the sample S, or the like. The observation optical system 20 includes the lens 15, the dichroic mirror 14, the dichroic mirror 13, a filter 21, and a lens 22.

The observation light L2 from the sample S is refracted by the lens 15 to enter the dichroic mirror 14. The observation light L2 transmitted through the dichroic mirror 14 enters the dichroic mirror 13. The observation light L2 transmitted through the dichroic mirror 13 enters the filter 21.

The filter 21 is an optical filter and transmits part of the light from the sample S. Specifically, the filter 21 is a wavelength filter that transmits or shields light in accordance with the wavelength. Accordingly, the camera 23 which will be described later can detect only the observation light L2 having a desired wavelength. In other words, light having a wavelength transmitted through the dichroic mirror 14, the dichroic mirror 13, and the filter 21 becomes the observation light L2.

The observation light L2 transmitted through the filter 21 is detected by the camera 23 through the lens 22. The optical image I of the sample S is thereby captured. The lens 22 and the camera 23 will be omitted from description, as they are similar to those of the first embodiment.

Note that the dichroic mirror 14 may be removably laid out on an optical path. When the optical image of the sample S is observed, the dichroic mirror 14 may be detached from the optical path. That is, the dichroic mirror 14 should only be inserted onto the optical path at the time of spectrometry.

Next, the spectrometric optical system 30 will be described. The spectrometric optical system 30 is an optical system from the sample S to a photodetector 55 of the spectrophotometer 50. That is, the spectrometric optical system 30 guides signal light rays L3 produced from the sample S to the photodetector 55. The spectrometric optical system 30 includes the lens 15, the dichroic mirror 14, a filter 31, a lens 32, the second fiber unit 40, and the spectrophotometer 50. The second fiber unit 40 and the spectrophotometer 50 will be omitted from description, as they are similar to those of the first embodiment.

The signal light rays L3 produced from the sample S enter the lens 15. The signal light rays L3 refracted by the lens 15 enter the dichroic mirror 14. The dichroic mirror 14 transmits light having the laser wavelength. The dichroic mirror 14 reflects the signal light rays L3 having a wavelength different from that of the illumination light L1 toward the filter 31.

The signal light rays L3 reflected off the dichroic mirror 14 enter the filter 31. The filter 31 is an optical filter and transmits part of the light from the sample S. Specifically, the filter 31 is a wavelength filter that transmits or shields light in accordance with the wavelength. Specifically, the filter 31 is a bandpass filter that shields light having the laser wavelength of the light source 11 and transmits light in a predetermined wavelength band. Accordingly, the spectrophotometer 50 which will be described later can subject the signal light rays L3 having a wavelength different from the laser wavelength to spectrometry.

The signal light rays L3 transmitted through the filter 31 enter the lens 32. The lens 32 is an image-forming lens and forms an image of the sample S at the entrance end of the second fiber unit 40. That is, the entrance end surface of the second fiber unit 40 is laid out at a position conjugate to the sample S. The second fiber unit 40 has a plurality of fibers and guides the entered signal light rays L3 to the spectrophotometer 50. Raman scattered light from the sample S can thereby be subjected to spectrometry similarly to the first embodiment.

### (Fiber Layout)

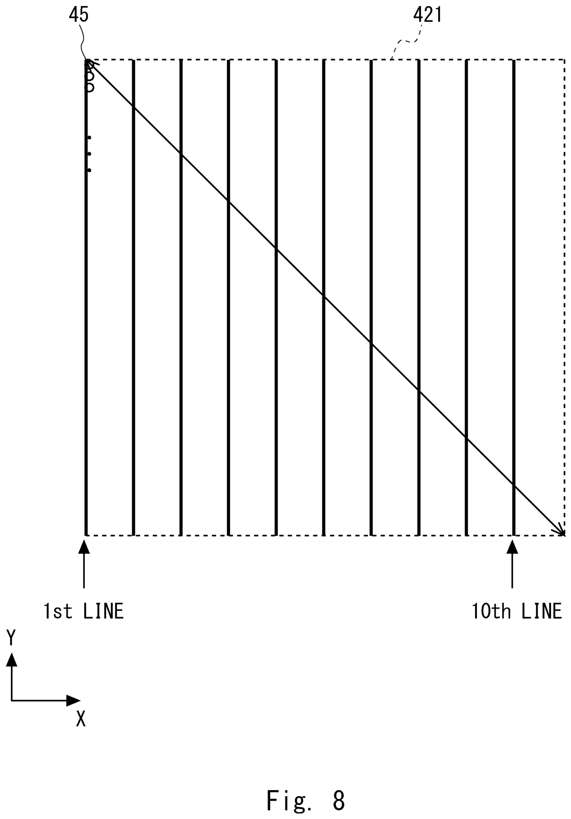

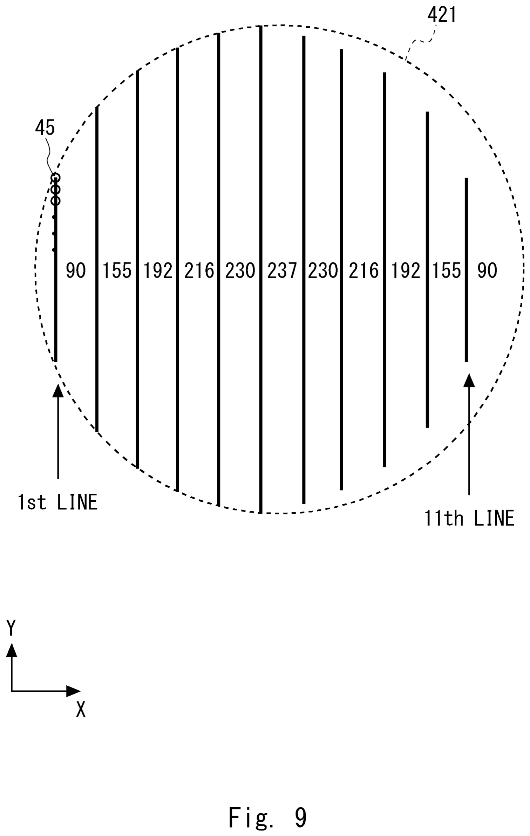

Next, a fiber layout configuration will be described using Fig. 8 and Fig. 9. Fig. 8 and Fig. 9 are XY plan views schematically showing a range in which signal light rays dispersed by a diffraction grating are detected by the photodetector 55. Note that the configuration except the fiber layout will be omitted from description, as a configuration similar to that of the first embodiment can be used.

In Fig. 8, ten lines of fiber columns are provided in the X direction. In Fig. 8, the outermost line on the -x side is the first line, and the outermost line on the +x side is the tenth line. In Fig. 8, the number of fibers in each line is equal. Specifically, two hundred fibers 45 are provided in a line. That is, the two hundred fibers 45 are arranged along the Y direction in each line. The total number of the fibers 45 in the second fiber unit 40 is 2000 (= 200 × 10). In the Y direction, a plurality of the fibers 45 are laid out at regular intervals. In the X direction, respective pitches are laid out at regular intervals.

A fiber diameter of each of the fibers 45 is such that a coating is 55 µm, cladding is 48 µm, and a core is 40 µm. A line has a length of 11 mm (55 µm × 200) in the Y direction. A pixel size in the photodetector 55 is 11 µm × 11 µm. The photodetector 55 has a sensor size of 22.528 mm × 22.528 mm. A required number of pixels in the Y direction is 1000 (11 mm/11 µm).

Suppose that signal light rays in a line are dispersed into 100 columns of pixels. That is, signal light rays from one fiber 45 are dispersed into 100 pixels by the spectrophotometer 50 and are detected. Therefore, a required number of pixels in the X direction is 1000 (100 pixels × 10 lines). The exit end surface has a size of 11 mm (1000 pixels × 11 µm) in the X direction. The exit end surface 421 has a size of 11 × 11 mm on the XY plane and thus has a diagonal size of 15.56 mm.

On the other hand, in Fig. 9, the number of fibers in each line is different. In Fig. 9, eleven lines of fiber columns are provided. The number of fibers in a line is the smallest at both ends in the X direction, and the number of fibers in a line increases toward the center. The number of fibers in a line decreases toward both the ends in the X direction. Specifically, the number of fibers in a line is 90, 155, 192, 216, 230, 237, 230, 216, 192, 155, and 90 sequentially from the line on the -x side. Therefore, the total number of the fibers 45 is 2003. The fibers 45 are laid out symmetrically with the sixth line at the center used as a basis.

The largest number of fibers per line is 237. The maximum length in the Y direction at the exit end surface 421 is 13.035 mm (55 µm × 237). The required number of pixels in the Y direction is 1185 (= 13.035 mm/11 µm). The number of fiber columns is 11 columns. The length in the X direction is 11 mm before dispersion and 12.1 mm after dispersion. In the spectrophotometer 50, the signal light rays L3 are dispersed into 100 pixels per line and are detected. The required number of pixels in the X direction is 1100 (100 pixels × 11 lines).

The fibers 45 are laid out such that the exit end surface 421 has a circular or an elliptical outer shape. The exit end surface 421 has a diagonal length of 13.08 mm. Therefore, the diagonal length can be reduced by about 16% as compared with the configuration of Fig. 8. Such reduction of the diagonal size can downsize the optical system of the spectrophotometer 50. Furthermore, an influence caused by a factor such as aberration of the lenses in the spectrophotometer 50 and limb darkening due to the lenses can be reduced. Image-forming performance and light detection efficiency of the optical system can be improved, which enables highly accurate spectrometry. Note that the fiber arrangement shown in Fig. 8 or Fig. 9 is also applicable to the configuration of the first embodiment.

### Examples

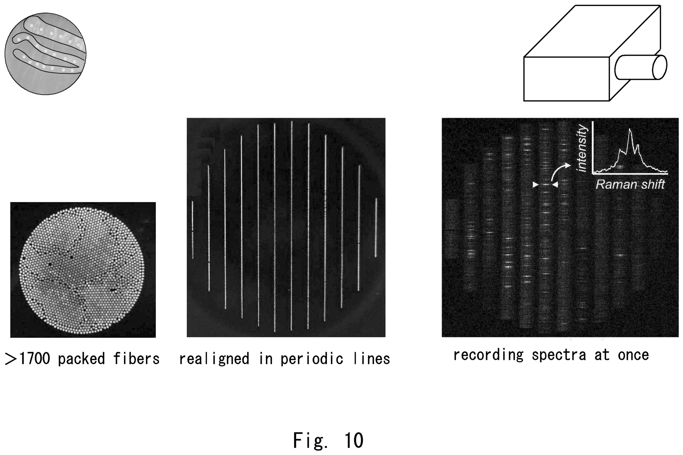

Fig. 10 is a diagram showing images of the entrance end and the exit end of fibers. At the entrance end of the fibers 45, approximately 1700 fibers are laid out densely. At the exit end of the fibers 45, the fibers have a periodic multi-line arrangement. At the exit end of the fibers 45, the respective lines are laid out at predetermined intervals. Fig. 10 also shows an image when signal light rays from the exit end of the fibers are detected by the spectrophotometer. The image of Fig. 10 is an image captured by the two-dimensional array detector of the spectrophotometer. Raman spectra are measured by dispersing signal light rays passed through the respective fiber strands.

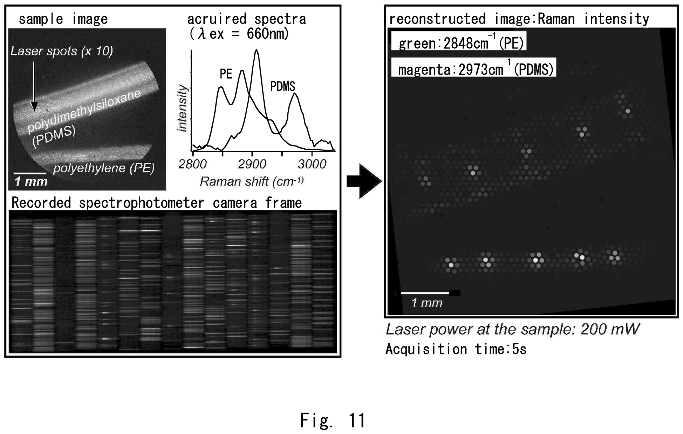

Fig. 11 is a diagram showing a result obtained by measuring PDMS (Polydimethylsiloxane) and PE (polyethylene). Excitation light has a wavelength of 660 nm, and a data acquisition time is five seconds. As shown in an image of a sample in Fig. 11, the sample contains PDMS and PE. Since PDMS and PE are detected in different pixels, respective Raman spectra can be detected. A spectroscopic image reconstructed from the Raman spectra is shown. Herein, a color image is constructed in which a peak wavenumber of PE, 2848 cm⁻¹, is shown in green and in which a peak wavenumber of PDMS, 2973 cm⁻¹, is shown in magenta.

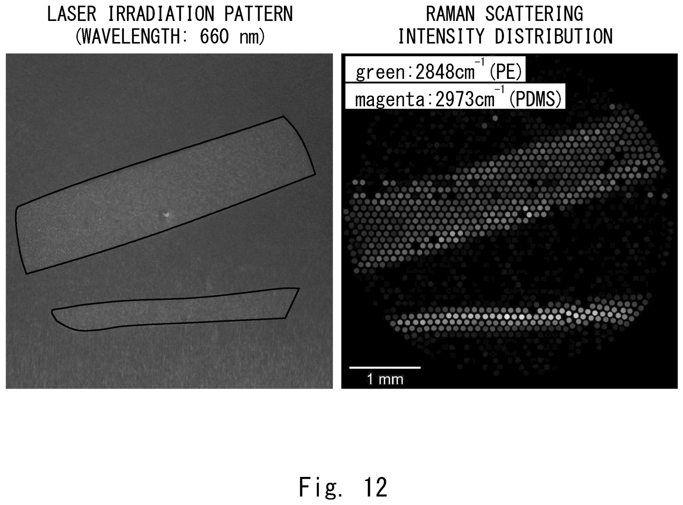

Fig. 12 shows a microscopic image obtained when ROIs are entirely irradiated with excitation light and a spectroscopic image. Fig. 12 shows a spectroscopic image of a sample containing PDMS (Polydimethylsiloxane) and PE (polyethylene). In Fig. 12, a color image is constructed in which the peak wavenumber of PE, 2848 cm⁻¹, is shown in green and in which the peak wavenumber of PDMS, 2973 cm⁻¹, is shown in magenta.

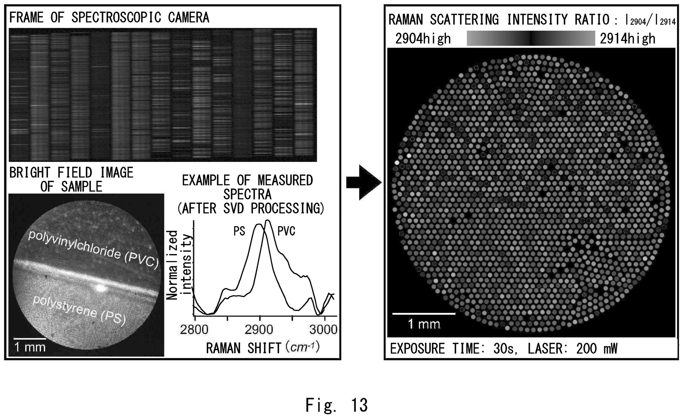

Fig. 13 is a diagram showing a measurement result of a sample containing PS (polystyrene) and PVC (polyvinyl chloride). Fig. 13 shows a bright-field image of the sample and a frame image of a spectroscopic camera. Fig. 13 also shows Raman spectra after a noise component is removed by SVD (Singular value decomposition) processing and a spectroscopic image constructed from the Raman spectra. The spectroscopic image shows a ratio (= I₂₉₀₄/I₂₉₁₄) of an intensity I₂₉₀₄ of the peak wavenumber of PS, 2904 cm⁻¹, to a Raman scattered light intensity I₂₉₁₄ of the peak wavenumber of PVC, 2914 cm⁻¹. A display color of the spectroscopic image is changed in accordance with the Raman scattered light intensity ratio.

### (Discrimination Method)

Next, a method for discriminating components of a sample in the above-described spectrometry apparatus 1 will be described. Specifically, the processing apparatus 60 performs a principal component analysis to analyze components of a sample. In this measurement, the samples are rat tissues, and the number of measured samples is 214. The 214 samples include 52 samples of nerve bundles, 54 samples of tendons, 54 samples of muscle tissues, and 54 samples of adipose tissues.

The samples are exposed to laser for 10 seconds to perform measurement. Five laser spots are formed on a sample. Since spectra are measured by signal light rays from the respective spots, the number of measurement spots is 1070. That is, 1070 Raman spectra are measured. For nerve bundles, 260 Raman spectra are measured.

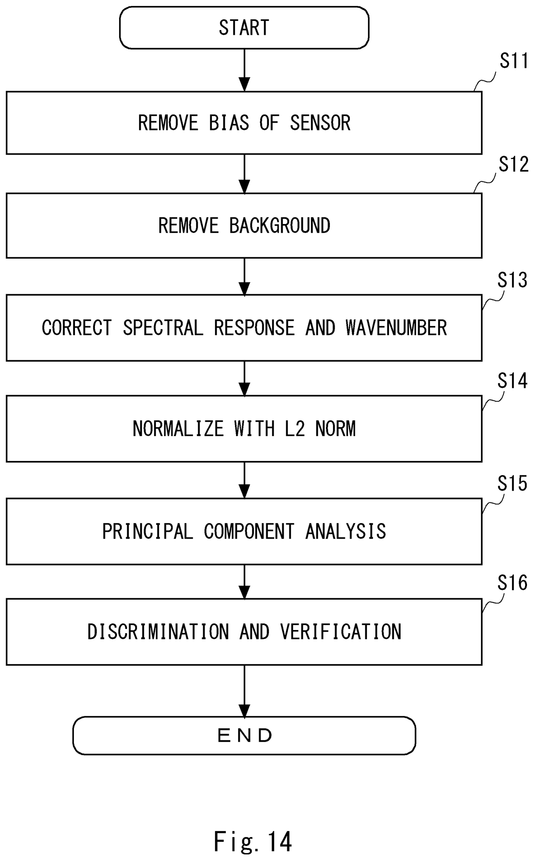

Fig. 14 is a flowchart showing a method for discriminating components of a sample based on a plurality of Raman spectra. The method shown in Fig. 14 may be executed by a program in the processing apparatus 60 such as a personal computer. Hereinafter, a technique for discriminating whether or not a measurement spot of a spectrum is a nerve will be described. It is needless to say that the following discrimination method is also applicable to components other than nerves.

First, the processing apparatus 60 removes a sensor bias in the photodetector 55 of the spectrophotometer 50 (S11). For example, the processing apparatus 60 removes a bias by subtracting data in a state in which a shutter of the photodetector 55 is closed from measured spectra data.

Next, the processing apparatus 60 removes a background (S12). Herein, data due to background light other than Raman scattered light is removed. Next, the processing apparatus 60 corrects a spectral response and wavenumbers (S13). For example, the processing apparatus 60 corrects a spectral response due to fluctuation in sensor pixels or the like, and corrects the wavenumbers of spectra. The processing apparatus 60 finds an L2 norm, and based on the L2 norm, normalizes the corrected spectra (S14). Note that a publicly-known technique can be used for the processing in S11 to S14, and a detailed description thereof will thus be omitted.

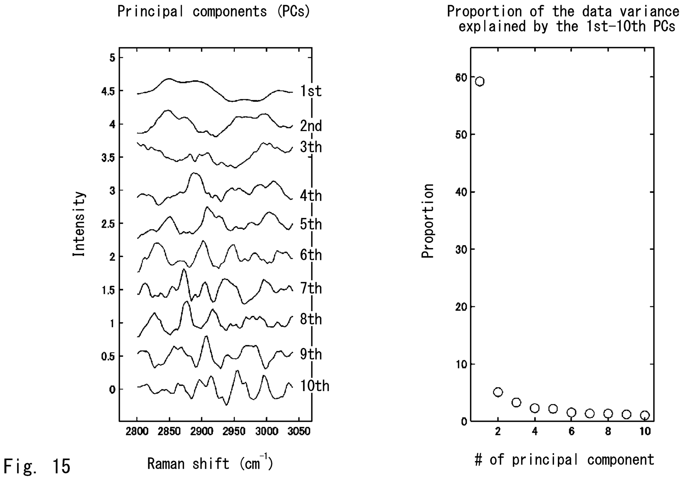

Next, the processing apparatus 60 performs a principal component analysis on a plurality of spectra (S15). Fig. 15 is a graph showing a result obtained by the principal component analysis. In Fig. 15, a graph showing principal component vectors of the first principal component to the tenth principal component and a graph showing a contribution ratio of each of the principal components are shown. Note that in the graph of the principal component vectors, the principal component vectors are shown with offsets. Herein, an example of discriminating a nerve based on scores up to the fifth principal component having a high contribution ratio will be described. Note that the order of principal components to be used for discrimination can be changed as appropriate based on the contribution ratio and a cumulative contribution ratio.

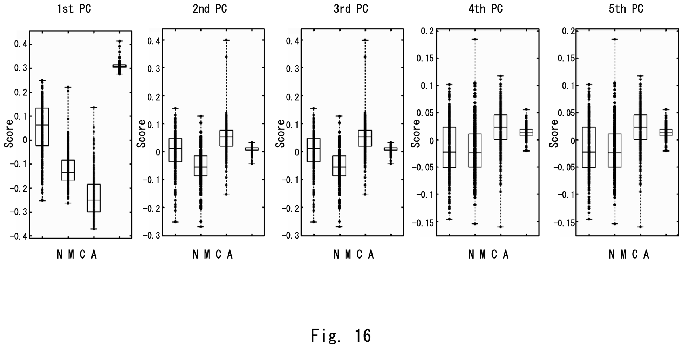

Fig. 16 shows graphs showing, as box plots, scores of the first principal component to the fifth principal component of Raman spectra of 1070 measurement spots. In Fig. 16, N indicates a nerve bundle, M indicates a muscle tissue, C indicates a tendon, and A indicates an adipose tissue. In Fig. 16, boxes each including a median value and data within ±25% are shown.

The processing apparatus 60 discriminates whether or not a sample is a nerve (N) based on the scores of the first principal component to the fifth principal component and performs verification thereof (S16). For example, the processing apparatus 60 performs machine learning for finding a discriminant, based on the scores of the first principal component to the fifth principal component obtained from a plurality of spectra. The processing apparatus 60 calculates the discriminant by performing machine learning using, as learning data (also referred to as training data), 1069 spectra of the 1070 spectra. In the case of using the scores of the first principal component to the fifth principal component, for example, the discriminant is an expression in accordance with a boundary in a five-dimensional score space. Herein, the processing apparatus 60 determines the discriminant by linear discriminant analysis.

Specifically, components of the sample are known at all measurement spots. That is, whether Nerve spectra or non-nerve spectra (Non-nerve) other than Nerve is known. Here, the processing apparatus performs supervised machine learning using the 1069 spectra as supervised data. The processing apparatus 60 evaluates whether the remaining one spectrum can be discriminated correctly by the discriminant generated through machine learning. By sequentially changing the spectrum to be verified, the accuracy of discrimination is verified. The processing apparatus 60 performs machine learning so as to construct a model having a higher accuracy based on a result of verification.

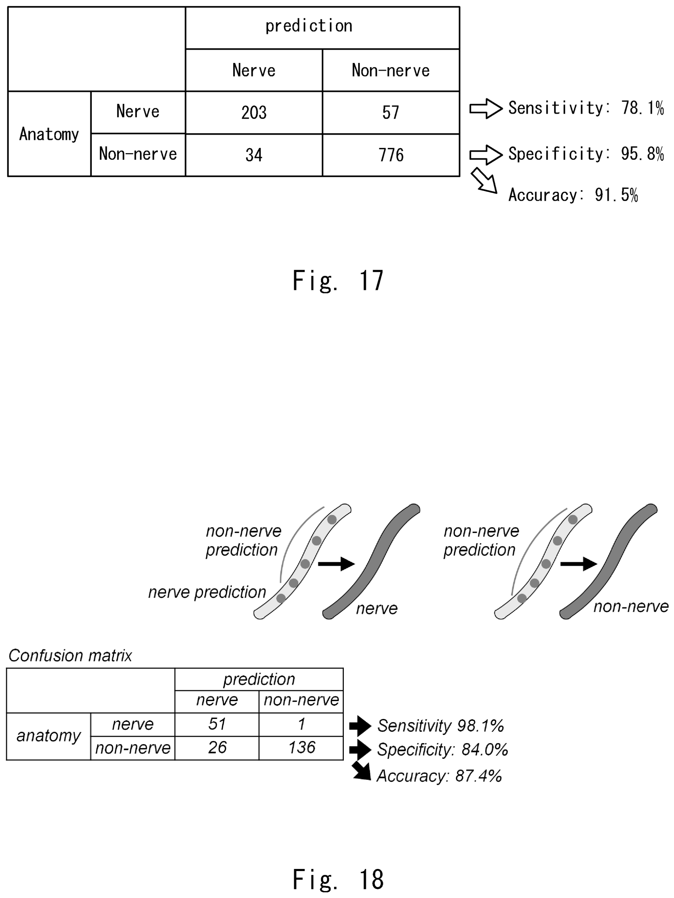

Fig. 17 is a table showing a result of discrimination using the discriminant. Fig. 17 shows, as prediction, a discrimination result in a case where each measurement spot is discriminated by the discriminant. Since 260 spots of the 1070 measurement spots are Nerve as described above, 810 spots are Non-nerve other than Nerve. As described above, the processing apparatus 60 calculates the discriminant through machine learning. The processing apparatus 60 performs discrimination based on the scores of the first principal component to the fifth principal component using the discriminant.

In the spectra obtained from nerves, the number of measurement spots discriminated as Nerve by the discriminant is 203, and the number of measurement spots discriminated as Non-nerve is 57. Thus, the sensitivity for Nerve is 78.1% (= 203/260). In the spectra obtained from Non-nerve, the number of measurement spots discriminated as Non-nerve by the discriminant is 776, and the number of measurement spots discriminated as Nerve is 34. Thus, the specificity for Non-nerve is 95.8% (= 776/810). Therefore, the accuracy of discrimination is 91.5% (= (203+776)/1070).

Fig. 18 is a table showing a discrimination result in a case where five spectra obtained by a single exposure are discriminated collectively. Herein, in a case where one (hereinafter referred to as a discrimination threshold) or more of the five spectra are discriminated as Nerve, all five spots of the sample are discriminated as Nerve. The processing apparatus 60 counts the number of spectra discriminated as Nerve among the simultaneously acquired spectra of the five measurement spots. In a case where the counted number of spectra is the discrimination threshold or greater, the processing apparatus 60 determines all the five measurement spots as Nerve. In a case where the counted number of spectra is less than the discrimination threshold, the processing apparatus 60 determines all the five measurement spots as Non-nerve.

As described above, the number of nerve samples is 52, and the number of non-nerve samples is 162. Of the 52 samples, the number of samples discriminated as Nerve is 51, and the number of samples discriminated as Non-nerve is 1. Thus, the sensitivity for Nerve is 98.1% (= 51/52). Of the 162 non-nerve samples, the number of samples discriminated as Non-nerve by the discriminant is 136, and the number of samples discriminated as Nerve is 26. Thus, the specificity for Non-nerve is 84.0% (= 136/162). Therefore, the accuracy of discrimination is 87.4% (= (51+136)/214).

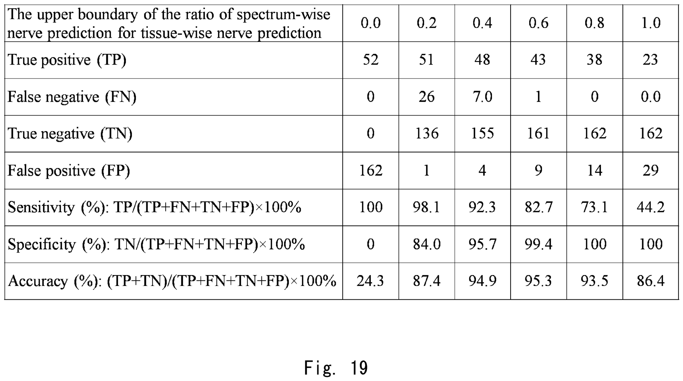

A verification result in a case where the discrimination threshold is changed to 0, 1, 2, 3, 4, and 5 will be described using Fig. 19. Fig. 19 shows the cases where the discrimination threshold is 0, 1, 2, 3, 4, and 5 as proportions of the discrimination threshold, respectively. In other words, the cases where the discrimination threshold is 0, 1, 2, 3, 4, and 5 are shown as 0.0 (= 0/5), 0.2 (= 1/5), 0.4 (= 2/5), 0.6 (= 3/5), 0.8 (= 4/5), 1.0 (= 5/5), respectively. In the case where the discrimination threshold is 2, for example, and in a case where two or more (40% or greater) of five measurement spots are discriminated as Nerve by the discriminant, all the five measurement spots are discriminated as Nerve.

In the table shown in Fig. 19, discrimination as Nerve is indicated as positive, and discrimination as Non-nerve is indicated as negative. Correct discrimination is indicated as True, and erroneous discrimination is indicated as False. Thus, discrimination of a nerve sample as Nerve is indicated as TP (True positive), and erroneous discrimination of a nerve sample as Non-nerve is indicated as FN (False negative). Discrimination of a non-nerve sample as Non-nerve is indicated as TN (True negative), and erroneous discrimination of a non-nerve sample as Nerve is indicated as FP (False positive).

For example, in the case where the discrimination threshold is 0 (0.0), all the 214 samples are discriminated as Nerve (positive). Thus, TP is 52, and FP is 162. FN and TN are 0. The sensitivity, specificity, and accuracy in the cases where the discrimination threshold is changed are shown respectively. Appropriate setting of the discrimination threshold enables discrimination with a higher accuracy. An accuracy higher than that in a case where respective measurement spots are discriminated separately can be obtained.

As described, the spectrometry apparatus 1 detects signal light rays from a plurality of spots of a sample with the spectrophotometer to measure a plurality of spectra. The processing apparatus 60 performs the principal component analysis for the plurality of spectra to calculate scores of principal components. The processing apparatus 60 discriminates components contained in the sample using the scores of the principal component analysis. With such a configuration, the components of the sample can be discriminated accurately. That is, components of measurement spots of the spectra can be specified.

Prior to the above-described discrimination, the spectrometry apparatus 1 may calculate the discriminant. For example, the processing apparatus 60 may calculate the discriminant through machine learning. A sample having known components is used as a reference sample. The spectrometry apparatus 1 subjects the reference sample to spectrometry to measure a plurality of spectra. Herein, the spectra obtained from the reference sample are used as learning spectra (learning data). The learning spectra become supervised data with ground truth labels. The processing apparatus 60 performs supervised machine learning using a plurality of learning spectra as supervised data. In machine learning, the discriminant is found such that the accuracy of discrimination of the learning spectra increases. Accordingly, components of the sample can be discriminated accurately based on spectra of a sample having unknown components. Note that the processing apparatus 60 can find a principal component axis by performing a principal component analysis on the reference sample having known components. The processing apparatus 60 may apply the principal component axis thus found to an unknown sample to find the principal component scores.

Part or whole of the processing in the processing apparatus 60 described above can be implemented as a computer program. Such a program can be stored using various types of non-transitory computer-readable media and can be supplied to a computer. The non-transitory computer-readable media include various types of substantial recording media. Examples of the non-transitory computer-readable media include a magnetic recording medium (for example, a flexible disc, a magnetic tape, a hard disk drive), a magneto-optical recording medium (for example, a magneto-optical disk), a CD-ROM (Read Only Memory), a CD-R, a CD-R/W, a semiconductor memory (for example, a mask ROM, a PROM (Programmable ROM), an EPROM (Erasable PROM), a flash ROM, and a RAM (Random Access Memory)). Alternatively, the program may be supplied to a computer through various types of transitory computer-readable media. Examples of the transitory computer-readable media include an electric signal, an optical signal, and an electromagnetic wave. The transitory computer-readable media can supply the program to the computer via a wired communication path such as an electric wire or an optical fiber or a wireless communication path.

Although the invention made by the inventor of the present invention has been specifically described based on the embodiment, it is needless to say that the present invention is not limited to the above-described embodiment and can be variously modified without departing from the spirit of the invention.

The present application claims priority to Japanese Patent Application No. 2023-111741, filed on July 6, 2023, the entire disclosure of which is hereby incorporated.

### Reference Signs List

- 1: SPECTROMETRY APPARATUS
- 11: LIGHT SOURCE
- 12: SPATIAL LIGHT MODULATOR
- 13: DICHROIC MIRROR
- 16: LENS
- 18: OBSERVATION ILLUMINATION LIGHT SOURCE
- 20: OBSERVATION OPTICAL SYSTEM
- 21: FILTER
- 22: LENS
- 23: CAMERA
- 30: SPECTROMETRIC OPTICAL SYSTEM
- 31: FILTER
- 32: LENS
- 40: SECOND FIBER UNIT
- 41: ENTRANCE-SIDE HOLDER
- 42: EXIT-SIDE HOLDER
- 45: FIBER
- 50: SPECTROPHOTOMETER
- 51: LENS
- 52: GRATING
- 54: LENS
- 55: PHOTODETECTOR
- 60: PROCESSING APPARATUS
- 70: FIRST FIBER UNIT
- 80: PORTABLE UNIT
- 800: PORTABLE ENCLOSURE
- 810: IRRADIATION OPTICAL SYSTEM
- 811: FIRST PORT
- 820: DETECTION OPTICAL SYSTEM
- 821: SECOND PORT
- 831: WINDOW
- L1: IRRADIATION LIGHT
- L2: OBSERVATION LIGHT
- L3: SIGNAL LIGHT RAY
- L4: OBSERVATION ILLUMINATION LIGHT

## Claims

1. A spectrometry apparatus comprising:
a light source that produces irradiation light;
a first fiber unit that the irradiation light enters;
a portable unit to which the first fiber unit is connected;
an irradiation optical system that is housed in the portable unit and guides the irradiation light emitted from the first fiber unit to a sample;
a detection optical system that is housed in the portable unit and guides signal light rays from the sample irradiated with the irradiation light;
a spectrophotometer that disperses the signal light rays and detects the signal light rays by a two-dimensional array photodetector;
a second fiber unit connected to the portable unit and having a plurality of fibers that guide the signal light rays from the detection optical system to the spectrophotometer, the plurality of fibers being adjacently arranged at an entrance end surface of the second fiber unit, and the plurality of fibers being arranged in a multi-line shape at intervals at an exit end surface of the second fiber unit, the exit end surface being located toward the spectrophotometer; and
a processing unit that, by referring to a layout relationship among the plurality of fibers at the entrance end surface and the exit end surface of the second fiber unit, generates a spectroscopic image of the sample from a result of detection by the two-dimensional array photodetector.

2. The spectrometry apparatus according to claim 1, further comprising a spatial light modulator that spatially modulates the irradiation light from the light source, wherein
the irradiation light modulated by the spatial light modulator enters the first fiber unit.

3. The spectrometry apparatus according to claim 2, comprising a camera that captures an optical image of the sample, wherein
a plurality of spots on the sample extracted based on the optical image are selectively illuminated.

4. The spectrometry apparatus according to claim 3, further comprising an observation illumination light source that produces observation illumination light, wherein
observation light from the sample illuminated with the observation illumination light propagates through the irradiation optical system and enters the first fiber unit, and
the camera detects the observation light emitted from the first fiber unit.

5. The spectrometry apparatus according to claim 4, wherein the observation illumination light source is a ring lighting provided at a leading end of the portable unit, the leading end being located toward the sample.

6. The spectrometry apparatus according to claim 3, wherein the entrance end surface of the second fiber unit is laid out at a position conjugate to the sample.

7. The spectrometry apparatus according to any one of claims 1 to 6, wherein a window that transmits the irradiation light and the signal light rays is provided at a leading end of the portable unit.

8. The spectrometry apparatus according to any one of claims 1 to 7, wherein the number of fibers included in a line decreases toward both ends in a direction corresponding to a dispersion direction of the spectrophotometer at the exit end surface of the second fiber unit.

9. A spectrometry apparatus comprising:
a light source that produces illumination light;
a spectrophotometer that disperses signal light rays from a sample illuminated with the illumination light and detects the signal light rays by a two-dimensional array photodetector;
a fiber unit having a plurality of fibers laid out in an optical path from the sample to the spectrophotometer, the plurality of fibers being adjacently arranged at an entrance end surface of the fiber unit, and the plurality of fibers being arranged in a multi-line shape at intervals at an exit end surface; and
a processing unit that, by referring to a layout relationship among the plurality of fibers at the entrance end surface and the exit end surface of the fiber unit, generates a spectroscopic image of the sample from a result of detection by the two-dimensional array photodetector, wherein
the number of fibers included in a line decreases toward both ends in a direction corresponding to a dispersion direction of the spectrophotometer at the exit end surface of the fiber unit.

10. The spectrometry apparatus according to any one of claims 1 to 9, wherein
the signal light rays from a plurality of spots of the sample are detected by the spectrophotometer to measure a plurality of spectra,
a principal component analysis is performed on the plurality of spectra to calculate scores of principal components, and
components contained in the sample are discriminated using the scores of the principal component analysis.

11. The spectrometry apparatus according to claim 10, wherein
signal light rays from a plurality of spots of a reference sample in which the components are known are detected by the spectrophotometer to find a plurality of pieces of learning data, and
supervised learning using the learning data is performed to calculate a discriminant that discriminates the components.

12. A spectrometry method comprising steps of:
producing irradiation light from a light source;
causing the irradiation light to enter a first fiber unit connected to a portable unit;
guiding the irradiation light emitted from the first fiber unit to a sample by an irradiation optical system housed in the portable unit;
causing signal light rays from the sample to enter a detection optical system provided in the portable unit;
causing the signal light rays propagated through the detection optical system to enter an entrance end surface of a second fiber unit connected to the portable unit, a plurality of fibers being adjacently arranged at the entrance end surface;
emitting the signal light rays from an exit end surface of the second fiber unit at which the plurality of fibers are arranged in a multi-line shape at intervals;
dispersing the signal light rays emitted from the exit end surface and detecting the signal light rays by a two-dimensional array photodetector; and
referring to a layout relationship among the plurality of fibers at the entrance end surface and the exit end surface of the second fiber unit, generating a spectroscopic image of the sample from a result of detection by the two-dimensional array photodetector.
